# EUROPÄISCHE PATENTANMELDUNG

(11) **EP 1 416 502 A1**
(43) Veröffentlichungstag der Anmeldung: **06.05.2004**
(21) Anmeldenummer: 02405921.4
(22) Anmeldetag: 29.10.2002
(51) Int. Cl.: H01B 3/30, H01B 3/44, C08L 23/06, C08K 3/00, C08K 3/22, C08K 3/20, H01B 7/18

(54) **Elektrokabel**

(71) Anmelder: Studer Draht-und Kabelwerk AG, 5658 Däniken (CH)
(72) Erfinder: Zeley, Almos, 5430 Wettingen (CH); Vögele, Toni, 5014 Gretzenbach (CH); Grossmann, Franz, 5013 Niedergössgen (CH)
(74) Vertreter: Schwander, Kuno

(57) **Zusammenfassung**

Das Elektrokabel besitzt eine einschichtige, strahlenvernetzte Aderisolierung, ihrerseits bestehend aus folgenden Komponenten:
a) 5 bis 50 Gew.% eines HDPE (High Density Polyethylene) mit einer Dichte ≥ 0,94 g/cm³,
b) 1 bis 50 Gew.% eines Polyethylens mit einer Dichte kleiner als 0,910 g/cm³,
c) 30 bis 70 Gew.% eines Flammschutzmittels,
d) 1 bis 40 Gew.% eines Kupplungsmittels,
e) 0,1 bis 10 Gew.% eines Stabilisatorsystems.

## Beschreibung

Die Erfindung betrifft ein strahlenvernetztes Elektrokabel mit einer Isolation, welche einerseits ausserordentlich robust, d.h. abriebbeständig und andererseits flammwidrig und umweltfreundlich ist. Das erfindungsgemässe Elektrokabel ist insbesondere für die Fahrzeugindustrie, die Bahn sowie auch für die Luft- und Raumfahrt bestimmt.

Bisher werden im Automobilkabelbereich vornehmlich einschichtige PVC-Kabelisolierungen oder halogenhaltige, meist mit organischen Bromverbindungen flammgeschützte, polyolefinische Isolations-Compounds eingesetzt.

Aufgrund einer immer kompakteren Bauweise unter der Motorhaube wachsen die Anforderungen an die Temperaturbeständigkeit. So wird zum Beispiel eine Gebrauchstemperaturklasse von 125°C oder gar 150°C gefordert, die mit herkömmlichen PVC-Isolationen nicht mehr zu realisieren ist. Bei Temperaturen ab 125°C kommen heute vernetzte Polyethylen-Compounds (PE) mit halogenhaltigem Flammschutzmittel und/oder fluorhaltigen Polymeren zum Einsatz.

Im Zuge der Umweltdiskussion geraten Isolationswerkstoffe mit halogenhaltigen Flammschutzmitteln mehr und mehr unter Druck. Für Automobilkabel ist es daher vorteilhaft, wenn die Kabelisolierungen, zum Beispiel im Falle einer thermischen Verwertung, keine giftigen und/oder korrosiven Bestandteile, wie etwa Halogenverbindungen, enthalten.

Für die Herstellung von isolierten, elektrischen Leitungen, die im Brandfall möglichst geringe Mengen Qualm sowie keine korrosiven und/oder nur geringe Mengen von toxischen Gasen freisetzen, werden bereits heute halogenfreie Isolationsmaterialien auf Basis von Polyethylen- und EthylenCopolymeren verwendet. Die Flammwidrigkeit halogenfreier Isolationsmaterialien wird - wie ebenfalls bekannt ist - durch Zugabe von Aluminiumhydroxid (ATH) und/oder Magnesiumhydroxid (MDH) erreicht, und es sind diese Isolationsmaterialien im Anwendungsfall ein- oder zweischichtig.

Ein derartiges, halogenfreies Isolationsmaterial ist zum Beispiel in der europäischen Offenlegungsschrift 0 871 181 beschrieben. Die entsprechende Kunststoffmischung enthält:
- 5 bis 85 Gew.% (bezogen auf die Kunststoffkomponente) eines Copolymers aus Ethylen und einem alpha-Olefin, wobei der alpha-Olefin-Anteil zwischen 10 und 30 Gew.% liegt,
- 5 bis 85 Gew.% LLDPE,
- 5 bis 85 Gew.% eines Polyolefins der Gruppe HDPE (High Density Polyethylen) oder PP (Polypropylen) und
- 5 bis 85 Gew.% einer ungesättigten Carboxylsäure oder eines durch ein Derivat einer ungesättigten Carboxylsäure modifizierten Olefins.

Die Summe der Kunststoffanteile der vorgenannten Mischung beträgt 100 Gewichtsprozent. Der Kunststoffmischung werden dann noch zusätzlich 40 bis 150 Gew.% eines Metallhydroxids als Füllstoff zugegeben.

Bei den bisher bekannten halogenfreien Kunststoffmischungen für Kabelisolationen wird nur eine geringe Abriebfestigkeit im fertig compoundierten Zustand erreicht, was zur Folge hat, dass diese Mischungen den durch einige PKW-Hersteller aufgestellten Anforderungen für Autokabel nicht genügen. Ferner besteht bei diesen bekannten Kunststoffmischungen auch noch das Problem einer nicht ausreichenden Flammwidrigkeit.

Die deutsche Autoindustrie hat einen Anforderungskatalog für Niederspannungskabel definiert. Dabei werden die Niederspannungskabel für verschiedene Temperaturklassen (85°C, 100°C, 125°C) eingeteilt. Für 85°C und 100°C werden nach wie vor Leitungen mit einem einschichtigen PVC-Isolationsmantel zugelassen. Bei den höheren Temperaturklassen sind halogenfreie Kabel bevorzugt, wobei letztere vorzugsweise ebenfalls einen einschichtige Isolationsmantel umfassen sollen.

Es ist besonders schwierig, die teilweise gegensätzlichen Anforderungen wie Abriebbeständigkeit, Flammwidrigkeit, Flexibilität und Ölbeständigkeit in einem einschichtigen Isolationsmantel zu vereinigen. Die herkömmlichen halogenfreien Mischungen auf PE/ATH, oder Ethylenvinylacetat EVA/ATH Basis haben in der Regel schlechte Abriebbeständigkeit. So wirken sich die flexible, weiche Polymer-Matrix und die grosse Menge Flammschutzmittel (55 - 65 Gew.%) bekannterweise negativ auf die Abriebbeständigkeit aus.

Aus der deutschen Offenlegungsschrift 10 035 647 ist eine vernetzbare, halogenfreie, flammgeschützte Kunststoffmischung bekannt, die als Isolationsmaterial für Autokabel verwendbar ist und gegenüber den vorstehend genannten Isolationsmaterialen wesentliche Vorteile aufweist.

Diese bekannte Kunststoffmischung umfasst folgende Komponenten:
a) 3 bis 50 Gewichtsanteile wenigstens eines Copolymers aus Ethylen und einem alpha-Olefin,
b) 30 bis 96 Gewichtsanteile eines Polyolefins hoher Dichte, insbesondere eines HDPE mit einer Dichte > 0,94 g/cm³,
c) 1 bis 20 Gewichtsanteile eines mit einem Derivat einer ungesättigten Carbonsäure, gegrafteten Polyolefins, wobei die Komponenten a) bis c) zusammen 100 Gewichtsanteile Kunststoff ergeben, und umfassend die weiteren Komponenten,
d) 40 bis 250 Gewichtsanteile eines Füllstoffs,
e) 0,1 bis 15 Gewichtsanteile eines Stabilisatorsystems.

Aufgabe der vorliegenden Erfindung ist es, ein Elektrokabel vorzuschlagen, das eine Aderisolation besitzt, die die vorgenannten Nachteile nicht aufweist, gegenüber der aus der deutschen Offenlegungsschrift 10 035 647 bekannten Kunststoffmischung verschiedenartig ist und bei mindestens gleicher Betriebssicherheit aus einer einfacheren Compound-Zusammensetzung besteht als erstere. Die Kunststoffmischung der Aderisolation soll ferner mindestens ein ölbeständiges Polymer sowie eine gute Abriebbeständigkeit besitzen und zusätzlich flammwidrig sein.

Diese Aufgabe wird gemäss der Erfindung durch ein Elektrokabel mit den Merkmalen des Anspruchs 1 gelöst.

Vorteilhafte Ausführungsformen des erfindungsgemässen Elektrokabels gehen aus den abhängigen Ansprüchen hervor.

Die Erfindung richtet sich auch auf eine halongenfreie, flammgeschützte Kunststoffmischung und ein Verfahren zur Herstellung eines Elektrokabels, nämlich eine Kunststoffmischung nach Anspruch 8 und ein Verfahren nach Anspruch 9.

Das erfindungsgemässe Elektrokabel besitzt als Isolationsmaterial eine vernetzte, halogenfreie sowie flammgeschützte Kunststoffmischung, die die folgenden Komponenten umfasst:
a) 5 bis 50 Gew.% eines vernetzten HDPE (High Density Polyethylene) mit einer Dichte ≥ 0,94 g/cm³,
b) 1 bis 50 Gew.% eines Polyethylens mit einer Dichte kleiner als 0,910 g/cm³,
c) 30 bis 70 Gew.% eines Flammschutzmittels,
d) 1 bis 40 Gew.% eines Kupplungsmittels,
e) 0,1 bis 10 Gew.% eines Stabilisatorsystems.

Obwohl die Vernetzung des Polymers in der Vorschrift der Automobilindustrie nicht explizit verlangt ist, lassen die Anforderung nach thermischer Belastbarkeit bei 175°C keine andere Wahl, als Vernetzung zu. Für die erfindungsgemässe Kunststoffmischung werden (a) High Density Polyethylene (HDPE) als Basispolymere mit einem höchstmöglichen kristallinen Anteil gewählt. Die verhältnismässig harten HDPE besitzen eine Dichte > 0.94 g/cm³, beispielsweise 0,960 g/cm³, und bestehen aus 70% kristalliner Phase und aus 30% amorpher Phase. Durch die hohen Kristallinanteile im PE lassen sich die Abriebbeständigkeit und die Medienbeständigkeit der Isolation wesentlich verbessern.

Um grosse Mengen eines halogenfreien Flammschutzmittels, wie etwa Aluminiumtrihydrat (ATH) in ein Polymer einarbeiten zu können, muss das Polymer ein Mindestmass an Flexibilität besitzen. Steife Polymere, wie zum Beispiel HDPE und PP, können ohne drastischen Abfall der Dehnung nur eine beschränkte Menge Füllstoff aufnehmen. Um das Füllstoffaufnahmevermögen des Polymers zu steigern, werden daher die steifen Kunststoffkomponenten mit mindestens einer weichen Blendkomponente vermischt. Im Gegensatz zu der aus der EP-A 0 871 181 und DE-A 10 035 647 bekannten Kunststoffmischung, bei welchen anstelle von weichen Blendkomponenten Polyethylen-Copolymere, wie etwa EVA, Ethylenethylacrylat (EEA), Ethlenbutylacrylat (EBA), Ethylenmethylacrylat (EMA) in die Mischung eingearbeitet werden, schlägt die hier vorliegende Erfindung vor, (b) mindestens ein Ethylen sehr niedriger Dichte (VLDPE), beispielsweise Ethylen-alpha-Olefin-Copolymere mit einer Dichte von ≤ 0,910 g/cm³ (vorzugsweise 0,880 g/cm³) als Blendkomponente in die Kunststoffmischung einzuarbeiten.

Ethylen-alpha-Olefin-Copolymere werden aus Ethylen und alpha-Olefinen (Buten, Hexen, Okten) mit Hilfe von Metallocen-Katalysatoren hergestellt. Die Polymere besitzen eine engere Molekulargewichtsverteilung und eine gleichmässige Verteilung der Seitenketten, was einen niedrigen Dichtebereich (bis 0.86 g/cm³) zur Folge hat. In diesem Dichtebereich redet man von Polyolefin Elastomere (POE), oder von Very Low Density Polyethylen (VLDPE). Der Vorteil des chemisch verwandten VLDPE als Blendkomponente für HDPE (gegenüber Polyolefin-Copolymeren) liegt in der guten Verträglichkeit in der Schmelze. Dadurch werden die mechanischen Eigenschaften - vor allem die Dehnung - der Compounds wesentlich verbessert. So ist es möglich Dehnungswerte nach der Vernetzung zwischen 150 und 250 % (die Dehnung bei PE-Copolymeren beträgt 80 - 150 %) zu erreichen.

Das Flammschutzmittel gemäss Komponente (c) ist vorzugsweise aus der Gruppe der Magnesiumhydroxide und/oder der Aluminiumhydroxide, insbesondere MDH und/oder ATH.

Wegen der hohen Verarbeitungstemperatur kommt als Flammschutzmittel im HDPE/VLDPE Blend vor allem Magnesiumhydroxid (MDH) in Frage. Besonders bevorzugtes Flammschutzmittel ist MDH mit einer Durchschnittskorngrösse von < 2 Mikron und einer spezifischen Oberfläche (BET) von ≥ 4 m²/g.

Vorzugsweise kann es sich bei dem verwendeten Magnesiumhydroxid um synthetisches Magnesiumhydroxid handeln. Dieses schliesst natürlich nicht aus, dass auch natürliches Magnesiumhydroxid, und/oder synthetisches Aluminiumhydroxid verwendet werden kann.

Um die Polymer-Matrix mit dem Flammschutzmittel chemisch verbinden zu können, müssen in jedem halogenfreien Compound Kupplungsmittel (d) eingesetzt werden. Das Kupplungsmittel dient insbesondere der Verbesserung der Polymer-Füllstoffkompatibilität. Für die erfindungsgemässe Kunststoffmischung kommen Polyolefin-Terpolymere oder Polyolefin-Pfropfpolymere mit funktionellen Gruppen in der Kunststoffkette als Kupplungsmittel in Frage. Mögliche funktionelle Gruppen sind:
Anhydrid, Carboxy, Epoxy, Methoxy, oder Ethoxy.

Bevorzugt sind Anhydrid-Terpolymere auf Polyolefin oder Polyolefin Copolymere-Basis, beispielsweise Terpolymere auf Basis von PE oder PP bzw. Terpolymere auf Basis von Ethylenvinylacetat (EVA), Ethylenethylacrylat (EEA), Ethylenmethylacrylat (EMA), Ethylenbutylacrylat (EBA) oder Ethylen Propylen Gummi (EPR).

Als bevorzugtes Polyolefin-Pfropfpolymer kommt vor allem ein Derivat einer ungesättigten Carbonsäure in Frage. Das Derivat der ungesättigten Carbonsäure ist dabei vorzugsweise ein Maleinsäureanhydrid.

Das Stabilisatorsystem (e) umfasst bevorzugt einen oder mehrere der folgenden Zusätze: primäre Antioxidantien, sekundäre Antioxidantien, Metalldesaktivatoren, aminische Lichtstabilisatoren, UV-Absorber, Calcium- oder Zinkstearat. Diese Stabilisator-Komponenten dienen insbesondere der thermischen Stabilisierung während des Compoundierschrittes, der Extrusion, der Strahlenvernetzung sowie der Luftalterung der vernetzten Kabelisolierung.

Ein bevorzugtes Stabilisatorsystem setzt sich aus primären Antoxidantien (vorwiegend sterisch gehinderte Phenole und sterisch gehinderte Amine als Radikalfänger), UV-Stabilisatoren (zum Beispiel ein aminischer Lichtstabilisator HALS), einen sekundären Antioxidantien (Phosphite und Thioester als Hydroperoxidzersetzer) und Metalldesaktivatoren zusammen.

Die Kunststoffmischung kann ferner Hilfsmittel für die Verarbeitbarkeit (insbesondere Extrudierbarkeit) enthalten, zum Beispiel mindestens einer Fettsäureester oder Polyethylenwachs.

Zusätzlich kann auch noch ein Vernetzungs-Hilfsmittel der Kunststoffmischung beigegeben werden. Das Vernetzungshilfsmittel dient dabei als Aktivator für den Vernetzungsprozess, so dass die Vernetzungsdosis herabgesetzt werden kann. Für die Vernetzungsmittel können die üblichen multifunktionellen Acrylate, Methacrylate (TRIM), Tryallylcyanurat (TAC), Tryallylisocyanurat (TAIC) eingesetzt werden.

Die erfindungsgemässe Kunststoffmischung kann in an sich bekannter Weise durch Mischen der einzelnen Komponenten erhalten werden. Die Kunststoffmischung kann dabei in einem Zweischnecken-Kneter, Buss Co-Kneter oder in einem Innenmischer zubereitet werden.

Die vernetzbare, halogenfreie sowie flammgeschützte Kunststoffmischung wird anteilsmässig so abgestimmt, dass die Komponenten (a) bis (e) zusammen 100 Gewichtsanteile ergeben. Die Angabe "halogenfrei" im Sinne der vorliegenden Erfindung bedeutet, dass die Kunststoffmischung keine über Verunreinigungen hinausgehenden Mengen an Halogenen enthält.

Ein Elektrokabel der erfindungsgemässen Art lässt sich wie folgt herstellen: Auf eine Kupferlitze, ihrerseits bestehend aus einer Vielzahl von Einzeldrähten mit einem Gesamtquerschnitt von 0,13 mm² bis 70 mm², wird durch Extrusion die als Aderisolationsschicht dienende Kunststoffmischung aufgezogen. Nach der Extrusion wird die Schicht durch Einwirkung energiereicher Elektronenstrahlen oder mit Hilfe von Peroxiden vernetzt.

Kabel und Leitungen, die mit der erfindungsgemässen, vernetzten Kunststoffmischung als Hüllmaterial umgeben sind, sind hochgradig flammwidrig und weisen eine exzellente Abriebfestigkeit, auch bei kleinsten Kabeldurchmessern bzw. Isolationsstärken, auf. Neben den guten Abriebeigenschaften und der hohen Flammwidrigkeit weisen die erfindungsgemässen vernetzten Kunststoffmischungen und die daraus hergestellten erfindungsgemässen Kabel auch sehr gute mechanische Eigenschaften auf.

Vorstehend wird auf die Bedeutung des kristallinen Anteils im HDPE hingewiesen. Die Kristallinität von HDPE ist nicht nur von dem Rohstoff selber, sondern auch vom Verarbeitungsprozess, genaugenommen von der Abkühlungsgeschwindigkeit der PE-Schmelze abhängig.

Es wurde nun überraschend festgestellt, dass darauf geachtet werden muss, dass die Litze oder der Draht für den Aufzug der Isolationsschicht vorgewärmt wird. Die Temperatur der Litze bzw. des Drahtes sollte > 50°C sein, vorzugsweise bei etwa 150⁰C liegen.

Nachfolgend werden Beispiel von Komponenten und Mischungen gemäss der Erfindung aufgeführt:

Beispiele von HDPE Kandidaten sind die folgenden:

| **Verbindung** | **Dichte g/cm**^{**3**} | **Smp.°C** | **Kristallinität** |
|---|---|---|---|
| Lupolen 6021D | (HDPE: 0.960 - 0.2) | 141°C | 70 % |
| Vestolen A6013 | (HDPE: 0.959 - 2.0) | - | - |
| Vestolen A6012 | (HDPE: 0.958 - 0.9) | - | - |
| ExxonMobil HYA800 | (HDPE: 0.961 - 0.7) | - | - |

### Beispiel 1 einer Kunststoffmischung:

| **Anteil** | **Komponente** | |
|---|---|---|
| 25% | HDPE | Dichte: 0.960 g/cm³ |
| 14% | VLDPE | Dichte: 0.885 g/cm³ |
| 5% | EEA-MAH | Maleinsäureanhydrid Terpolymer von Ethylenethylacrylat |
| 53% | MDH | Magnesiumhydroxid |
| 1,0% | primär AO | sterisch gehindertes Phenol |
| 1,2% | UV Stabilisator | HALS Lichtstabilisator |
| 0,8% | sekundär AO | Phosphite |

### Beispiel 2 einer Kunststoffmischung:

| **Anteil** | **Komponente** | |
|---|---|---|
| 20,5% | HDPE | Dichte: 0.950 g/cm³ |
| 19% | VLDPE | Dichte: 0.870 g/cm³ |
| 4% | VLDPE-MAH | Maleinsäureanhydrid VLDPE Pfropfpolymer |
| 53% | MDH | Magnesiumhydroxid |
| 1,0% | primär AO | sterisch gehindertes Phenol |
| 1,2% | UV Stabilisator | HALS Lichtstabilisator |
| 0,8% | sekundär AO | Phosphite |
| 0,5% | TRIM | Trimethilolpropan Trimethacrylat |

### Beispiel 3 einer Kunststoffmischunq:

| **Anteil** | **Komponente** | |
|---|---|---|
| 25% | HDPE | Dichte: 0.960 g/cm³ |
| 14,5% | VLDPE | Dichte: 0.875 g/cm³ |
| 4,3% | HDPE-MAH | Maleinsäureanhydrid HDPE Pfropfpolymer |
| 53% | MDH | Magnesiumhydroxid |
| 2,4% | primär AO | sterisch gehindertes Phenol |
| 0,8% | Metalldesaktivator | |

Es sei an dieser Stelle darauf hingewiesen, dass die vorstehend genannten Rezepturen für die erfindungsgemässe Aderisolierung nur eine Auswahl von mehreren möglichen Ausführungsformen darstellen und im Rahmen der Erfindung in verschiedener Hinsicht geändert werden können.

## Patentansprüche

1. Elektrokabel mit einem elektrischen Leiter und einer den Leiter umhüllenden, einschichtigen, strahlenvernetzten Aderisolierung aus einem halogenfreien, flammwidrigen Polymernetzwerk, **dadurch gekennzeichnet, dass** die Aderisolierung aus einer Kunststoffmischung gebildet ist, ihrerseits bestehend aus folgenden Komponenten:
a) 5 bis 50 Gew.% eines HDPE (High Density Polyethylene) mit einer Dichte ≥ 0,94 g/cm³,
b) 1 bis 50 Gew.% eines Polyethylens mit einer Dichte kleiner als 0,910 g/cm³,
c) 30 bis 70 Gew.% eines Flammschutzmittels,
d) 1 bis 40 Gew.% eines Kupplungsmittels,
e) 0,1 bis 10 Gew.% eines Stabilisatorsystems.

2. Elektrokabel nach Anspruch 1, **dadurch gekennzeichnet, dass** das High Density Polyethylene (HDPE) eine Dichte von 0,940 g/cm³, vorzugsweise 0,960 g/cm³ besitzt.

3. Elektrokabel nach Anspruch 1 oder 2, **dadurch gekennzeichnet, dass** das mindestens eine Ethylen sehr niedriger Dichte (VLDPE) ein Ethylen-alpha-Olefin-Copolymer ist, das eine Dichte < 0,910 g/cm³, vorzugsweise eine Dichte von 0,880 g/cm³ besitzt.

4. Elektrokabel nach einem der Ansprüche 1 bis 3, **dadurch gekennzeichnet, dass** das Flammschutzmittel im wesentlichen aus Magnesiumhydroxid besteht.

5. Elektrokabel nach Anspruch 4, **dadurch gekennzeichnet, dass** das Magnesiumhydroxid eine Durchschnittskorngrösse von < 2 Mikron und eine spezifischen Oberfläche (BET) von ≥ 4 m²/g aufweist.

6. Elektrokabel nach einem der Ansprüche 1 bis 5, **dadurch gekennzeichnet, dass** das Kupplungsmittel ein Polyolefin-Terpolymere oder Polyolefin-Pfropfpolymere ist, das als funktionelle Gruppe ein Anhydrid, Carboxy, Epoxy, Methoxy, oder Ethoxy aufweist.

7. Elektrokabel nach einem der Ansprüche 1 bis 6, **dadurch gekennzeichnet, dass** das Stabilisatorsystem einen oder mehrere der folgenden Zusätze umfasst: primäre Antioxidantien, sekundäre Antioxidantien, Metalldesaktivatoren, aminische Lichtstabilisatoren, UV-Absorber, Calcium- oder Zinkstearat.

8. Vernetzbare, halogenfreie sowie flammgeschützte Kunststoffmischung, insbesondere für Elektrokabel, umfassend die Komponenten:
a) 5 bis 50 Gew.% eines HDPE (High Density Polyethylene) mit einer Dichte ≥ 0,94 g/cm³,
b) 1 bis 50 Gew.% eines Polyethylens mit einer Dichte kleiner als 0,910 g/cm³,
c) 30 bis 70 Gew.% eines Flammschutzmittels,
d) 1 bis 40 Gew.% eines Kupplungsmittels,
e) 0,1 bis 10 Gew.% eines Stabilisatorsystems.

9. Verfahren zur Herstellung eines Elektrokabels gemäss einem der Ansprüche 1 bis 7, wobei die Aderisolierung durch Extrusion auf den elektrischen Leiter aufgezogen wird, **dadurch gekennzeichnet, dass** der elektrische Leiter für den Aufzug der Aderisolierung auf mindestens 50°C vorgewärmt wird.

10. Verfahren nach Anspruch 9, **dadurch gekennzeichnet, dass** der elektrische Leiter für den Aufzug der Isolationsschicht auf 150°C vorgewärmt wird.
